**Europäisches Patentamt**

**European Patent Office**

**Office européen des brevets**

(19)

(11) Publication number: **0 055 669**
**B1**

(12) # EUROPEAN PATENT SPECIFICATION

(45) Date of publication of patent specification: **01.08.84**

(51) Int. Cl.³: **B 01 D 53/04, C 01 B 21/04**

(21) Application number: **81402069.9**

(22) Date of filing: **23.12.81**

(54) Repressurization for pressure swing adsorption system.

(30) Priority: **29.12.80 US 221161**

(43) Date of publication of application:
**07.07.82 Bulletin 82/27**

(45) Publication of the grant of the patent:
**01.08.84 Bulletin 84/31**

(84) Designated Contracting States:
**AT BE CH DE FR GB IT LI LU NL SE**

(56) References cited:
**US - A - 4 077 779**
**US - E - 29 941**

(73) Proprietor: **CALGON CORPORATION**
**Route 60-Campbell's Run Road**
**Robinson Township Pennsylvania 15205 (US)**

(72) Inventor: **Vo, Toan P.**
**333 Oakville Drive Apt. 2A**
**Pittsburgh Pennsylvania 15220 (US)**

(74) Representative: **Corre, Jacques Denis Paul et al,**
**Cabinet Regimbeau 26, Avenue Kléber**
**F-75116 Paris (FR)**

## Description

### BACKGROUND OF THE INVENTION

This invention relates to a method for obtaining in large volume a gas stream that is 90%—99% higher by volume in one component of a binary gas mixture. This invention especially relates to an adsorption process for providing an enriched gas stream by means of a pressure swing adsorption system using carbon molecular sieves. More particularly, this invention relates to a method for providing an inexpensive and high volume source of gases such as nitrogen, hydrogen or methane, requiring less energy to operate than either cryogenic or other pressure swing adsorption systems, and yet supplying gases of comparable quality.

The term binary gas mixture, as used herein, refers to air and other gas mixtures primarily comprised of two components of different molecular size. The term enriched gas refers to a gas mixture comprised of that component of the binary gas mixture relatively unadsorbed after passage of the binary gas mixture through an adsorbent.

The use of pressure swing adsorption for the fractionation, or separation of a gaseous mixture involves passing the mixture at an elevated pressure through a bed of absorbent which is selective in its capacity to adsorb one or more of the components of the mixture. This selectivity is governed by the size of pores in the adsorbent the pore size distribution and the total pore volume. Thus, gas molecules with a kinetic diameter equal to or less than the pore size are trapped, or adsorbed, on the adsorbent while gas molecules of larger diameters pass through the bed. The adsorbent, in effect, sieves the gas according to its molecular size.

As the gas travels through the adsorbent bed, the pores are filled with gas molecules. One can envision an adsorption front, moving through the bed, akin to the liquid adsorption front moving through a solid adsorbent in a column chromatography system. After some time, an insufficient number of pores are available to retain gas molecules. This is known as the breakthrough point, that is, the point at which adsorption has ceased and the gas exiting the bed is essentially the same in composition as the gas that entered the adsorbent. After this breakthrough point, the bed must be regenerated.

After treatment, of the mixture to adsorb selected components therefrom, the flow of the gaseous mixture through the bed is interrupted and the adsorbent is regenerated for reuse by purging it of the adsorbed components either by vacuum or by passing through the bed, generally in the opposite direction of flow taken by the gaseous mixture, a purge gas stream which generally comprises a portion of the purified product at a low pressure.

Pressure swing adsorption usually includes at least two beds of adsorbent so that while one bed is being regenerated, the other is in the adsorption phase producing product gas. In some cases, three of more adsorbent beds are used so that, for example, while one bed is adsorbing, a bed that has just completed its adsorption phase is being vented to prepare for regeneration while a third bed is being repressurized for the adsorption phase. In a typical three bed system using this method as described above, the adsorbent beds are arranged in parallel, i.e., the outlet end of all columns are connected together and the inlet ends of all columns are connected together. The use of more than two adsorbent beds typically achieves the desired end of high purity product gas but the increased number of beds results in increased cost both in terms of regeneration energy requirements and the amount of adsorbent necessary.

The recovery of oxygen enriched air utilizing an adsorption process employing siliceous or carbon containing adsorption agents and involving the use of temperature or pressure changes during adsorption and desorption is well known. Certain silicates, as for example zeolites, are effective for preferably adsorbing nitrogen from its mixtures with oxygen so that by conducting air through a zeolite filled column, the first issuing gas is effectively enriched in oxygen content. The regeneration of zeolites however requires considerable expense in terms of energy and apparatus.

Also well known is the use of carbon molecular sieves for the production of enriched nitrogen from air. These sieves posses a pore structure with a size comparable to the kinetic diameter of oxygen. When used in a pressure swing adsorption system, these sieves selectively adsorb oxygen from a gas mixture, allowing other components to pass. A four bed pressure swing adsorption unit has been successfully employed in the separation of hydrogen gas from its mixture with carbon dioxide, water and light aliphatic hydrocarbons.

Also well known is the fractionation of other binary gas mixtures by pressure swing adsorption. For example, carbon monoxide from its mixture with hydrogen using zeolite 13X and carbon dioxide from its mixture with fuel gas mixtures using charcoal, alumina or silica.

Binary gas mixtures of argon and oxygen or helium and methane have been separated on an adsorbent of partially oxidized carbon in a pressure swing adsorption process.

Typical problems in the present carbon molecular sieve technology include; low yield of product gas, large amounts of molecular sieve required and energy inefficient regeneration methods.

### SUMMARY OF THE INVENTION

The object of this invention is to provide a novel method of repressurization for a three column pressure swing adsorption system which contains molecular sieve carbon as the adsorbent. This method provides a good yield of enriched gas in addition to overcoming the prior art problems regarding energy use in regeneration of the adsorbent. Thus there is provided a three column adsorption process for the production of enriched gas which comprises the sequential steps of:

a) passing a binary gas mixture, at an adsorption pressure in the range of 3.0—8.0 bars through a first and a second of the adsorption beds containing carbon molecular sieves arranged in series to yield enriched gas until the first adsorption bed in the series reaches breakthrough;

b) at breakthrough passing said binary gas mixture through the second adsorption bed in the series to produce a second gas mixture while reducing the pressure in said first adsorption bed in the series to atmospheric pressure by venting said first adsorption bed through its inlet end;

c) passing said second gas mixture into the inlet end of the third adsorption bed in the series to achieve partial pressurization in the range of 40—90% of said adsorption pressure while said first adsorption bed is regenerated by vacuum in the range of 9,33—13,3 kPa (70—100 torr) applied to its inlet end;

d) fully pressurizing said third adsorption bed to said adsorption pressure by the introduction of enriched gas through its outlet end;

e) repeating steps (a) through (d), using the next two beds in series to yield enriched gas.

## BRIEF DESCRIPTION OF THE DRAWING

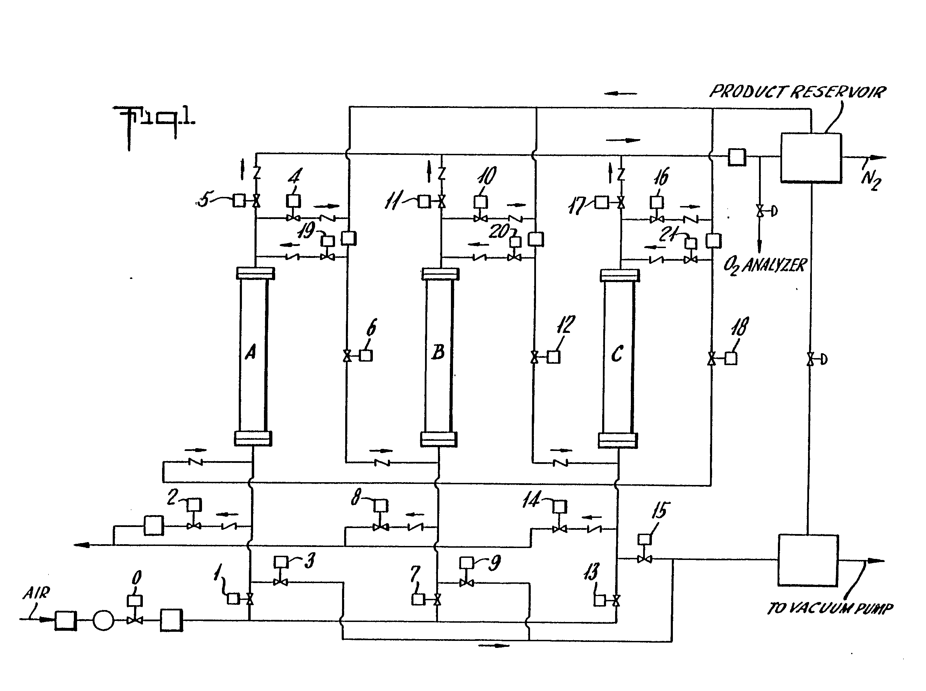

FIG. 1 is a schematic flowsheet of an apparatus for practicing the novel method of repressurization described herein.

## DETAILED DESCRIPTION

The method for employing the novel repressurization technique of this invention can be better understood by reference to the accompanying drawing which shows a three column pressure swing adsorption unit for fractionation of a binary gas mixture in accordance with this invention. Although the present invention is described and illustrated in connection with a preferred embodiment, it is to be understood that modifications and variations may be used without departing from the spirit of the invention. For example, any binary gas mixture including, but not limited to, air (nitrogen and oxygen) methane and carbon dioxide, or hydrogen and carbon monoxide will suffice.

Referring to the drawing in detail, there is shown three pressure resistant columns A, B, and C arranged in series, each of which is filled with a bed of carbon molecular sieve suitable for the fractionation of nitrogen from air.

The series of valves connecting the pressure resistant columns A, B, and C may be defined by the number shown in the drawing and by the function performed in this one preferred arrangement:

(a) Valve 0
—main air flow valve.
(b) Valves 1, 7, and 13
—inlet air valves to columns A, B, and C respectively.
(c) Valves 3, 9, and 15
—regeneration valves-vacuum pump for columns A, B, and C.
(d) Valves 2, 8, and 14
—purge valves — release column pressure for columns A, B, and C.
(e) Valves 5, 11, and 17
—product flow valves — from columns A, B, and C.
(f) Valves 19, 20 and 21
—backfilling valves — product nitrogen gas introduced into outlet end of columns A, B, and C after partial pressurization.
(g) Valves 4, 6, 10, 12, 16 and 18
—feed gas and breakthrough gas connection between outlet of one column and inlet of other column.

While columns A, B, and C are shown in the vertical position, they may be installed in either the horizontal or vertical position without adverse effect to the mode of operation.

Ambient air is dried and compressed and introduced into the system via valve 0. The ambient air may be modifed, prior to adsorption, by passing it through a condenser to remove excess humidity as a relative humidity of less than 40% is preferred. Also, a filter or scrubber may be employed to remove other gases such as carbon dioxide, sulfur dioxide or oxides of nitrogen. These steps improve the purity of the exiting gas stream and are employed when the specification for 100% pure nitrogen mandates such prior removal. They are however auxiliary and not requisite to the successful operation of this invention.

Feed air is admitted into any one of the three columns A, B or C at an adsorption pressure of 3.0—8.0 bars, via valve 0 and valves 1, 7 or 13. For convenience, this description will assume that the process starts in column A. Nitrogen gas is discharged from column A through valve 4 and flows via valve 6 to the inlet end of column B. Nitrogen gas exits column B via valve 11 and the nitrogen flow rate is measured by a mass flow meter and the nitrogen gas oxygen content is analyzed upstream from the product reservoir. A stream of nitrogen gas is discharged from the product reservoir to keep its pressure constant.

While two carbon beds are acting in series to generate nitrogen, the third bed is being regenerated by vacuum. Thus while columns A and B are producing nitrogen via open valves 0, 1, 4, 6 and 11, column C is being regenerated by a vacuum in the range of 70—100 torr via open valve 15. When the gas exiting column A reaches its breakthrough point valves 1, 4 and 6 are closed, thus isolating column A while valve 11 is closed and valves 7, 10 and 12 are opened thereby stopping the flow of product nitrogen from column B and partially pressurizing column C to about 40—90%, preferably 60—80%, of the adsorption pressure.

Nitrogen gas from the product reservoir enters column C via valve 21 to further pressurize the column to the adsorption pressure while column A has been vented to atmospheric pressure through valve 2 and is being regenerated by vacuum in the range of 70—100 torr via valve 3.

Nitrogen is now produced by columns B and C via open valves 7, 10, 12 and 17. When the gas exiting column B reaches its breakthrough point valves 7, 10 and 12 are closed to isolate column B and valve 17 is closed while valves 13, 16 and 18 are opened thereby stopping the flow of nitrogen from column C and partially pressurizing column A to about 40—90%, preferably 60—80%, of the adsorption pressure.

Nitrogen gas from the product reservoir enters column A via valve 19 to further pressurize the column to the adsorption pressure while column B is vented to atmospheric pressure through valve 8.

Nitrogen is now produced by columns C and A via open valves 13, 16, 18 and 5 while column B is regenerated by vacuum in the range of 70—100 torr via valve 9.

When compressed air is admitted to column A again the cycle will be completed. Thus by employing two columns in series, A and B, B and C or C and A to produce nitrogen while simultaneously regenerating the remaining column, a large volume of nitrogen is obtained with maximum effective use of the adsorbent beds.

## Claims

1. An adsorption process employing three adsorption beds arranged in series for producing an enriched gas stream, characterised by the sequential steps of:

a) passing a binary gas mixture, at an adsorption pressure in the range of 3.0—8.0 bars through a first and a second of the adsorption beds containing carbon molecular sieves arranged in series to yield enriched gas until the first adsorption bed in the series reaches breakthrough;

b) at breakthrough passing said binary gas mixture through the second adsorption bed in the series to produce a second gas mixture while reducing the pressure in said first adsorption bed in the series to atmospheric pressure by venting said first adsorption bed through its inlet end;

c) passing said second gas mixture into the inlet end of the third adsorption bed in the series to achieve partial pressurization in the range of 40—90% of said adsorption pressure while said first adsorption bed is regenerated by vacuum in the range of 9,33—13,3 kPa (70—100 torr) applied to its inlet end;

d) fully pressurizing said third adsorption bed to said adsorption pressure by the introduction of enriched gas through its outlet end;

e) repeating steps (a) through (d), using the next two beds in series to yield enriched gas.

2. The adsorption process of Claim 1 wherein said binary gas mixture is air, and said enriched gas is nitrogen.

3. The adsorption process of Claims 1 or 2 wherein the breakthrough gas is admitted to partially pressurize the.bed to about 70% of the adsorption pressure.

## Patentansprüche

1. Adsorptionsverfahren unter Verwendung von drei hintereinander angeordneten Adsorptionsbetten zur Erzeugung eines angereicherten Gasstroms, gekennzeichnet durch die aufeinanderfolgenden Stufen:

a) Führen eines binären Gasgemischs, bei einem Adsorptionsdruck im Bereich von 3,0—8.0 bar durch ein erstes und ein zweites der Adsorptionsbetten, die Kohlenstoff-Molekularsiebe hintereinander angeordnet enthalten, unter Bildung eines angereicherten Gases, bis das erste Adsorptionsbett in der Serie den Durchbruch erreicht;

b) beim Durchbruck Führen des binären Gasgemischs durch das zweite Adsorptionsbett in der Serie zur Erzielung eines zweiten Gasgemischs, wobei der Druck in dem ersten Adsorptionsbett in der Serie auf Atmosphärendruck durch Entlüften des ersten Adsorptionsbettes durch sein Einlassende verringert wird;

c) Leiten des zweiten Gasgemischs in das Einlassende des dritten Adsorptionsbettes in der Serie zur Erzielung einer teilweisen Drucksteigerung im Bereich von 40—90% des Adsorptionsdrucks, wobei das erste Adsorptionsbett durch Vakuum im Bereich von 9,33—13,3 kPa (70—100 Torr), das an sein Einlassende angelegt wird, regeneriert wird;

d) volle Drucksteigerung des dritten Adsorptionsbettes auf den Adsorptionsdruck, durch Einführen von angereichertem Gas durch sein Auslassende;

e) Wiederholen der Stufen (a) bis (d) unter Verwendung der nächsten beiden Betten in der Serie, um angereichertes Gas zu erzielen.

2. Adsorptionsverfahren nach Anspruch 1, bei dem das binäre Gasgemisch Luft ist und das angereicherte Gas Stickstoff ist.

3. Adsorptionsverfahren nach Anspruch 1 oder 2, bei dem das Durchbruchgas die teilweise Drucksteigerung des Bettes auf etwa 70% des Adsorptions drucks ausüben kann.

## Revendications

1. Procédé d'adsorption employant trois lits d'adsorption disposés en série pour produire en courant gazeux enrichi, caractérisé par les étapes successives consistant à:

a) faire passer un mélange gazeux binaire, à une pression d'adsorption dans un intervalle de 3,0—8.0 bars à travers le premier et le second des lits d'adsorption contenant des tamis moléculaires carbonés disposés en série pour donner du gaz enrichi jusqu'à ce que le premier lit d'adsorption dans la série atteigne la rupture;

b) à la rupture faire passer ledit mélange gazeux binaire à travers le second lit d'adsorption dans la série pour produire un second mélange gazeux tout en réduisant la pression dans ledit premier lit d'adsorption dans la série à la pression atmosphérique de dégageant ledit lit d'adsorption par son extrémité d'entrée;

c) faire passer ledit second mélange gazeux dans l'extrémité d'entrée du troisième lit d'adsorption dans la série pour obtenir une pressurisation partielle dans l'intervalle de 40—90% de ladite pression d'adsorption tandis que ledit premier lit d'adsorption est régénéré par la vide dans un intervalle de 9,33—13,3 kPa (70—100 Torr) appliqué à son extrémité d'entrée;

d) pressuriser entièrement ledit troisième lit d'adsorption à ladite pression d'adsorption par l'introduction de gas enrichi à travers son extrémité de sortie;

e) répéter les étapes (a) à (d) en utilisant les deux lits suivants en série pour donner du gaz enrichi.

2. Procédé d'adsorption de la revendication 1 où lit mélange gazeux binaire est l'air, et ledit gaz enrichi est l'azote.

3. Procédé d'adsorption des revendications 1 ou 2 où l'on admet le gaz de rupture pour pressuriser partiellement le lit à environ 70% de la pression d'adsorption.

Fig.1.

PRODUCT RESERVOIR

O₂ ANALYZER

N₂

TO VACUUM PUMP

AIR

A   B   C

0 055 669